# EUROPEAN PATENT APPLICATION

(11) **EP 1 396 798 A1**
(43) Date of publication of application: **10.03.2004**
(21) Application number: 02354128.7
(22) Date of filing: 03.09.2002
(51) Int. Cl.: G06F 17/30, G06F 13/00, G06F 1/00

(54) **A license file, a license management module and alicense management system**

(71) Applicant: Hewlett-Packard Company, Palo Alto, CA 94304 (US)
(72) Inventor: Reynaud, Sylvain, 38100 Grenoble (FR)
(74) Representative: Lloyd, Richard Graham

(57) **Abstract**

A licence file for a software element readable by a licence management module to control use of the software element, the licence file having an associated licence identifier,
the licence file comprising at least one codeword
one codeword of the licence file comprising an master codeword, the master codeword encoding the licence identifier,
and at least one codeword of the licence file comprising a component identifying a component or feature of the software element.
wherein the licence file indicates to the licence management module that use of a component or feature of the software element is permitted when the licence file comprises a valid master codeword and a valid codeword comprising a component ID identifying the component or feature.

## Description

### Field of the Invention

This invention relates to a licence file, a licence management module, a licence management system, a method of controlling use of a software element and a method of supplying a licence file.

### Background of the Invention

For a supplier of software applications, it is desirable to limit or prevent unauthorised copies of their software being made and distributed. Conventionally, software applications are distributed together with a written licence permitting the user or purchaser only limited rights to copy or use the software. Although such written licences provide a legal constraint on copying the software, enforcement of the licence through the Courts is complex and time-consuming. As such, it is desirable that a software licence is in some way automatically enforced.

A number of products and systems are known whereby a software application is able to check that it is licensed in response to an attempt to run or otherwise use the application. It is for example known to run a software application with a licence manager which checks that the software is running on a specific computer system. Such a licence is referred to as being "node-locked", and requires an identifier of the computer system to be stored and checked by the licence manager. Where the computer system is, for example, a personal computer, a licence manager such as Sentinel LM will check one or more identifiers associated with the computer on which the application is running, for example the disk drive serial number, processor serial number, IP address or any other identifier as appropriate. Where a computer system is provided with a unique host ID, it is known to node lock a licence to that host ID, for example by using a licence manager program such as Flex LM.

Where a software application is licensed, it is often the case that the application comprises a package having a plurality of separate components or features, where the user may only be licensed to use a particular sub-set of the components or features. A flexible way to implement such a licence is known by providing a licence file in which individual components are identified and appropriately licensed by providing a key. Such a system is known from, for example, United States patent no. 5671412. When a client system wishes to use a component of a software package, it transmits a licence request to a licence server which reads the licence file to identify a record corresponding to the requested component and to read a key or codeword associated with that licence record. The validity of the key is checked, to ensure that the licence file has not been tampered with and that the licence is genuine and any other criteria assessed, such as number of licences available against the number of current users, expiry date and so forth. The licence server then transmits a response to the client system indicating whether or not the user is licensed to use the requested component. The licence file may comprise a line of text associated with the or each component, identifying the licence terms, together with a key generated in accordance with the line of text to prevent tampering, as used in Flex LM. The password itself may alternatively encode the terms of the licence, for example as used in the licence management program Licence Power/iFOR, and as may also be used in FlexLM.

A difficulty with such licence management modules is that the licence file may often be complex to prepare and edit prior to use of the application, with a large number of entries for multi-component software applications. To permit a purchaser to use the software application, they must be supplied with a licence file with the codewords for all of the appropriate licensed features. Where the licence is node-locked, the codewords will all be dependent on the or each host ID of the hardware and must be generated accordingly. This can impose delays in supplying and setting up an operational computer system. Where the licence is node-locked, and the customer wishes to transfer the software to a new computer system, it is then necessary to update all of the codewords to take account of the new host ID. Similarly, where a licence is supplied on a trial basis such that the codewords expire after a pre-selected period, when the purchaser wishes to upgrade to a full licence or otherwise renew the licence, again, all of the codewords need to be replaced. This necessarily involves a software supplier in two separate supply steps, first supplying the software and subsequently supplying the purchaser with a licence file.

Where the purchaser has a computer system which is able to establish a communication link for example over the Internet with a licence generation system of the software supplier, then supplying or updating licence files to take account of multiple new codewords in relatively straightforward. Where this is not possible or desirable, for example where a computer system has an Internet connection but not on the host running the licensed software application for security reasons, the licence file must be supplied on a physical medium, for example a disk, or must be generated by the user in the correct format and in accordance with codewords supplied by the supplier. Neither solution is satisfactory or convenient.

An aim of the invention is to provide a licence file and licence manager whereby a licence may be activated changed or upgraded in a relatively simple manner.

### Summary of the Invention

According to one aspect of the invention we provide a licence file for a software element readable by a licence management module to control use of the software element, the licence file having an associated licence identifier,
the licence file comprising at least one codeword
one codeword of the licence file comprising an master codeword, the master codeword encoding the licence identifier,
and at least one codeword of the licence file comprising a component identifying a component or feature of the software element.
wherein the licence file indicates to the licence management module that use of a component or feature of the software element is permitted when the licence file comprises a valid master codeword and a valid codeword comprising a component ID identifying the component or feature.

The licence file may comprise at least one activation codeword, the activation codeword encoding the licence identifier and further licence information, wherein the licence file indicates to the licence management module that use of the feature of the software element is permitted where the file comprises at least one valid activation codeword.

The further licence information may comprise an identifier of a computer system on which use of the software element is permitted.

The master codeword or the further licence information may comprise expiry information.

The master codeword may comprise a component ID identifying a individually licensed feature or component of the software element.

The licence file may further comprise a further codeword wherein the further codeword encodes the licence identifier and a component ID identifying a individually licensed feature or component of the software element.

The further codeword may encode capacity information and/or expiry information.

The further codeword may comprise a serial number identifying that codeword.

According to a second aspect of the invention we provide a licence management module operable to control use of a software element wherein a licence file is associated with the software element, the licence file comprising a licence file according to the first aspect of the invention, the licence management module being operable to;
receive a client request indicating that use of a component of the software element is required,
read the master codeword and check its validity,
identify a codeword comprising a component ID identifying the component and check its validity, and
generate a response in accordance with the presence and validity of the master codeword and the codeword comprising a component ID.

The step of checking the validity of the master codeword may comprise one of the following steps;
where the master codeword encodes expiry information, comparing the expiry information with the current date or time and identifying the master codeword as invalid if the master codeword has expired;
where the master codeword does not comprise expiry information, identifying at least one valid activation codeword and identifying the master codeword as invalid if the licence identifier encoded in the or each activation codeword does not match the licence identifier encoded in the master codeword.

The licence file may comprise an activation codeword and the licence manager module may be operable to check the validity of the activation codeword by performing one or more of the following steps;
comparing the encoded licence identifier with the licence identifier encoded in the master codeword and identifying the activation codeword as invalid where the encoded licence identifier does not match the licence identifier encoded in the master codeword,
where the activation codeword comprises expiry information, comparing the expiry information with the current date or time and identifying the activation codeword as invalid if the activation codeword has expired,

The activation codeword may encode at least one identifer of a computer system on which use of the software element is permitted and the client request may comprise an identifier of a computer system on which the software element is being run, wherein the licence management module may be operable to compare the identifier encoded in the activation with codeword with the identifier of a computer system included in the client request and generate a response comprising an error message if the identifier encoded in the activation codeword does not match the identifier included in the client request.

The licence file may comprise a plurality of activation codewords encoding a plurality of identifiers of a plurality of computer systems, wherein the response comprising an error message may be generated if the identifier in the client request does not match at least one of the plurality of identifiers.

The licence management module may be operable to read the licence file to identify a further codeword encoding a component ID associated with the component of the software element and check the validity of the further codeword.

The licence management module may be operable to check the validity of the further code word by performing one or more of the following steps;
comparing the encoded licence identifier with the licence identifier encoded in the master codeword the licence file and identifying the codeword as invalid where the coded licence identifier does not match the licence identifier encoded in the master codeword,
comparing the expiry information with the current date or time and identifying the codeword as invalid if the codword has expired.

The further codeword may comprises capacity information and the licence management module may be operable to return the capacity information in the response.

The response may comprise an authorisation message or an error message in accordance with the validity of one or more of said codewords.

The licence management module may be operable to store the or each codeword in a cache, wherein the step of reading the licence file may comprise the step of reading the cache.

According to a third aspect of the invention we provide a licence management system comprising a software element, a licence file according to the first aspect of the invention associated with the software element and a licence management module according to the second aspect of the invention.

The software element may comprises a client program operable to generate the client request, transmit the client request to the licence management module, receive the response and perform an enforcement step in accordance with the response.

The enforcement step may comprise one or more of the following operations;
permitting the software element to run, preventing the software element from running, displaying a warning message, logging the request.

According to a fourth aspect of the invention, we provide a method of controlling use of a software element wherein a licence file is associated with the software component, the licence file having an associated licence identifier, the method comprising the steps of;
receiving a client request indicating that use of a component of the software element is required,
reading the master codeword and checking its validity,
identifying a codeword comprising a component ID identifying the component and checking its validity, and
returning a response in accordance with the presence and validity of the master codeword and the codeword comprising a component ID.

The client request may comprise an identifier of a computer system on which the software element is to be run, and the method may comprise the step of identifying a valid activation codeword encoding at least one identifier of a computer system on which the software element is permitted to be run or a valid activation codeword which does not encode an identifier of a computer system and generating a response comprising an error message if the activation codeword does encode an identifier of a computer system and the identifier in the client request does not match an identifier encoded in the activation codeword.

According to a fifth aspect of the invention we provide a method of supplying a licence comprising the step of supplying a licence file having an associated licence identifier and an master codeword encoding the licence identifier to a user, receiving the licence identifier and a computer system identifier from the user, generating an activation codeword encoding the licence identifier and computer system identifier and transmitting the activation codeword to the user.

The method may comprise the step of entering the activation codeword in the licence file.

### Brief Description of the Drawings

An embodiment of the invention will now be described by way of example only with reference to the accompanying drawings wherein:
Figure 1 is a schematic view of a licence file embodying the present invention,
Figure 2 is a diagrammatic illustration of a method of supplying a licence embodying the present invention.
Figure 3 is a schematic view of the operation of a licence management system embodying the present invention, and
Figure 4 is a flow chart showing the operation of a licence management module embodying the present invention.

### Detailed Description of the Preferred Embodiments

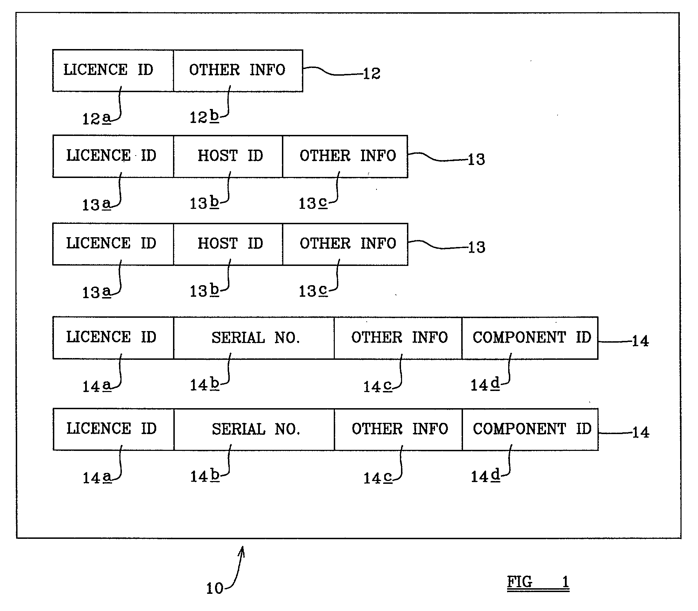

Referring now to Figure 1, a licence file embodying the present invention is generally illustrated at 10. The licence has an associated licence identifier, hereinafter referred to as a licence ID. The licence file 10 in this example comprises a simple text file. To enable the licence file 10 to provide a valid licence, a number of codewords are stored in the licence file 10. In this example, the term "codeword" is used in a general sense to refer to a character string which may be entirely alphabetical, entirely numeric in any desired base, alphanumeric or otherwise expressed as desired. Each codeword encodes appropriate information as described in more detail hereinafter, and is suitably encrypted and otherwise may be validated or authenticated to protect against tampering.

The licence file 10 is associated with one or more software elements. In this specification, it is intended that the term "software element" is to be understood to encompass any software entity, for example a group or package of computer programs, individual computer programs, subsection, module, object or class thereof or any feature function or group of functions whether solely implemented by a discrete software entity or not where it is desired to control use of that software element.

The licence file 10 comprises an master codeword 12. Without the master codeword, the licence file is invalid. The master codeword 12 encodes the licence ID as indicated at 12a and may also encode other information, for example the element name, expiry information, licensor or licensee information or any other information as desired at 12b. In particular, the further information 12b may comprise a component ID identifying a component or feature of the software element.

The licence file 10 may further comprise at least one activation codeword 13. The activation codeword 13 encodes the licence ID as shown at 13a, optionally one or more identifiers of one or more computer systems on which the software element may be run, hereinafter referred to as host IDs, and/or expiry information as shown at 13b, together with other information as desired shown at 13c, for example the element name and version. The licence file 10 may comprise as many activation codewords 14 as required, for example, to specify all the host IDs of a plurality of computer systems on which the software element may be run. If no valid activation codeword 13 encodes an identifier of a computer system, then any computer system is permitted to run the software element.

Where the software element comprises a number of individually licensed features or components, the licence file 10 will be provided with one or more further codewords 14. In like manner to the activation codeword 13, the component codewords 14 encode the licence ID as shown at 14a. A serial number 14b is encoded which is generated by the supplier and is unique to the further codeword 14 to prevent a user simply entering multiple copies of the same codeword 14 to obtain, for example, additional capacity. The further codeword 14 encodes further information 14c which may comprise capacity information indicating, for example, the number of simultaneous copies of the feature which may be used, or the maximum numbers of uses or the maximum permitted rate of use, and/or expiry information, or any other information as desired. The capacity information encoded in a plurality of further codewords 14 relating to the same component of feature may be cumulative, so that further licensed capacity may be added by entering an additional further codeword 14. The further codewords include a component ID corresponding to the licensed feature or component, shown at 14d.

Where a codeword encodes the licence ID, particularly the activation codeword 13 and component codewords 14, the licence ID may be stored as a hash or checksum of the licence ID to reduce the overall length of the relevant codeword 13, 14. Thus, a 64 bit licence identifier may be rendered as a 16 bit checksum in conventional manner. Similarly, a host ID may be stored as a checksum in an activation codeword 14.

Where an expiry date is indicated, it will be apparent that this need not be a simple calendar date, but may instead be a pre-set period since a start date, for example the number of days elapsed since 1 January 2000 or a number of elapsed seconds, or indeed a time elapsed since installation of the licence.

In the present example, the licence file 10 is a text file but the codewords 12, 13, 14 are suitably encrypted in conventional manner such that they are readable by a licence management module but are otherwise resistant to tampering.

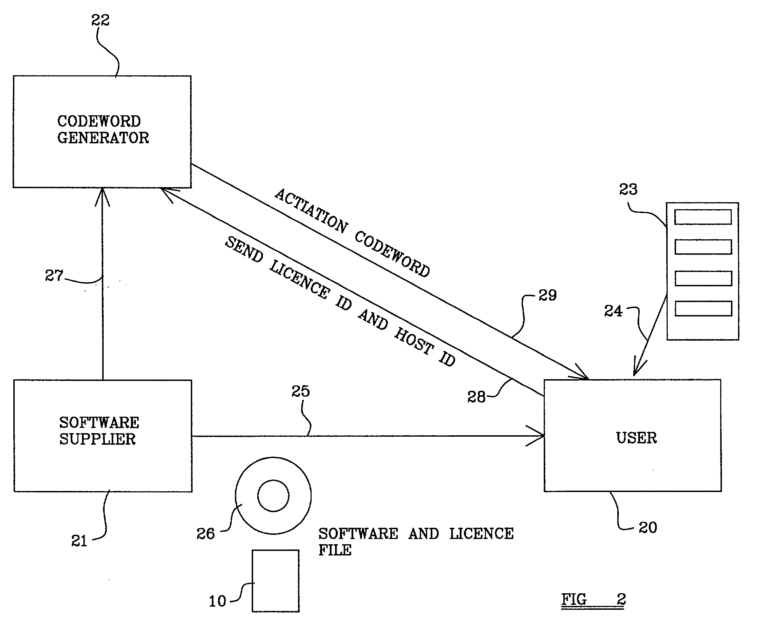

Referring now to Figure 2, a method by which the licence file and codewords are supplied to a user is shown. A user is generally indicated at 20, a supplier at 21 and a codeword generator shown at 22. When the user 20 wishes to set up a computer system, the user 20 obtains appropriate hardware in the form of an appropriate computer system 23, shown by arrow 24, and also, as shown by arrow 25, obtains the desired software element 26 from the supplier 21. A licence file 10 is supplied with the software element 26 comprising an master codeword 12 and, where the software element is a multi-featured or multi-component software element where only some features or components are to be licensed, such further codewords 14 as are necessary to supply the features, components or, generally functionality required by the user 20. As shown at 27, the supplier instructs the codeword generator 22 that a activation codeword may be generated for the software element 26 supplied to the user 20 and having the specified licence ID.

As shown by arrow 28, the user 20 then sends the host ID of the hardware 23 and the licence ID associated with the software 26 to the codeword generator 22. The licence ID may, for example, simply be printed on the licence certificate accompanying the software 26, and may be displayed when displaying the contents of the licence file 10 when read using a suitable program. The codeword generator 22 then encodes the host ID and licence ID in an activation codeword 13. The codeword generator 22 may encode any other desired information in the activation codeword 13 in accordance with the terms of the licence, such as expiry information. As shown by arrow 29, the activation codeword is then transmitted to the user 20. The user 20 then enters the activation codeword in the licence file 10.

Such a method of providing an activation codeword is particularly advantageous in that activation of a licence requires only the transmission of a single activation codeword 13 which may be done by any communication method, for example via fax or by telephone or otherwise. The activation code word 13 comprises a character string as discussed hereinbefore which the user may simply enter into the licence file 10, whether via a graphical user interface or by editing the licence file 10 with a text editor. Because the master codeword 12 and further codewords 14 are locked to the licence ID, there is no need to generate a complete set of codewords, each specifying the host ID and/or each specifying an expiry date if it is intended that an overall expiry date should apply to the licence.

To provide for a user to be able to begin using the software element 26 on the hardware 20 temporarily, for demonstration, trial or training purposes, without paying for the software element 26, it may be envisaged that the master codeword 12 may be set such that use of the software element 26 will be licensed for a limited period. In this case, no activation codeword 13 is needed. The entire licence file becomes invalid when the master codeword 12 expires. By locking the master codeword to an expiry date in this manner, it is possible to prevent a user from transforming a demonstration or trial licence into a definite licence merely by adding an activation codeword; the user must obtain a full, definitive licence.

The configuration of the licence file 10 is such that it is straightforward to adapt the licence file 10 in accordance with any changes required to the licence. For example, if the user wishes to use an initially unlicensed feature, wishes to increment the capacity of a licensed feature, or wishes to re-license a feature when the corresponding codeword has expired, this may be performed simply by issuing a codeword to be entered into the licence file 10. Where it is desired to use the software element 26 on a new computer system 23, for example as a result of a hardware update, the licence file 10 may be adapted simply by issuing a new activation codeword 13 which is locked to the host ID of the new hardware 23.

Enforcement of the licence by a licence management module will now be described with reference to Figures 1, 3 and 4. A licence file 10 as hereinbefore described is shown, stored on a data storage medium 42 and, additionally, in memory in a cache 43. Further, access to the licence file 10 as stored in the cache 43 may be improved further by selectively storing objects comprising codewords and/or component and host IDs from the licence file 10, as will be described in more detail below, and the following description should be read as encompassing this embodiment.

The licence file 10 is readable by a licence management module 30. The licence management module is operable to receive a client request from a client application 31, embedded in or otherwise associated with a software element 32, for example a software application with which the licence file 10 is associated. In this example, the licence management module 30, client application 31 and software element 32 are running on a computer system shown in dashed outline 33 and having an associated host ID 34a and date/time information 34b.

The licence management module 30 need not be necessarily be a distinct program. For example, the licence management module 30 may comprise an application programming interface (API) run by the client application 31, or may be a discrete program, or may be implemented otherwise as desired.

When a user attempts to use a licensed subset or feature or component of the software element 32, the client application 31 will generate a client request and pass it to the licence management module 30, as shown at 35. The client request will contain the necessary information such as the component identifier of the required feature, the host 34a or any other information as desired. On receipt of a client request from the client application 31, at step 36, the licence management module 30 reads the licence file 10 as shown at step 37. At step 38, the licence manager 30 checks the validity of the master codeword 12. If no master codeword 12 is present, then the licence file 10 is not valid. Where other information 12b comprising expiry information is encoded in the master codeword 12, the expiry information is compared with the date/time information 34b to ensure that the codeword has not expired. The master codeword 12 is valid if it encodes an expiry date and has not expired, or if it does not encode an expiry date and the licence file 10 comprises a valid activation codeword 13 encoding a licence ID 13a which matches the licence ID 12a.

If the master codeword 12 is valid and does not have an expiry date, then an activation codeword 13 is checked for existence, validity and consistency at step 39. The licence ID 13a encoded in the activation codeword is checked for consistency with the licence ID 12a encoded in the master codeword 12. If expiry information is specified in the other information 13c then the expiry information is checked against the date/time information 34b. Any other encoded information is checked for consistency, for example software application identifier, name, version number and so forth. As discussed above as shown at step 38a, in this example, no activation codeword 13 is required or checked if the master codeword 12 contains expiry information. If the codeword 12 is found to contain expiry information and is valid, then step 39 is omitted. This allows the supply of temporary licences for trial or other purposes as discussed above.

At step 40, if the client request 35 relates to a particular feature or component of a multi-licensed feature or multi-licensed component software element 32 the licence manager module checks that a component ID identifying the requested feature or component is encoded in a codeword. Where the other information 12b of the master codeword 12 comprises a component ID identifying a component or feature of the software element 16, the component ID may be compared with the component identifier in the client request. Where the master codeword 12 is valid and comprises expiry information then step 39 may be omitted, and where it comprises a component ID which identifies the requested component or feature, step 40 may be omitted, and an authorisation issued at step 41a.

Where a further codeword 14 comprises the component ID for that feature is identified, the further codeword 14 is checked for validity and consistency as required. For example, the encoded licence ID 14a, serial number 14b, further information 14c such as expiry information or capacity information, and the component ID 14d are checked. Where the further codeword 14 comprises capacity information, the licence management module 30 may return the capacity information in the response so that the client application can check if the capacity has been exceeded. Where several further codewords 14 identify a particular component or feature and contain capacity information, then the consolidated or total capacity may be returned in the response.

Where the feature is node locked, that is at least one host ID is encoded in an activation codeword 13, at step 40a the or each the host ID 13b specified in the activation codeword 13 is checked against the host ID 34a of the computer system 33 supplied by the client system in the request 35. If no host ID is encoded in an activation codeword, then any computer system is permitted to run the software feature.

Finally, at step 41 a response is returned to the client system 31. If all the codewords are present and valid and use of the software element is permitted on the computer system 33, then an authorisation 41a is returned confirming the validity of the licence and allowing use of the requested software element or licensed feature or component. If not, an error message 41b is returned. The client application 31 will then operate in accordance with the response 41. The operation may comprise one or more of the following steps; permitting use of the software element, preventing use of the software element, for example by ending the process of the software element, logging the attempted use, generating a warning display for the user, for example in the context where the licence file 10 indicates a capacity and the proposed use would exceed that capacity but would make use of an "overdraft" facility, or indeed any other operation as may be required.

It will be apparent that when a software element 32 is run for an extended period of time, the licence for that software element may expire during use of the software element 32 or variable feature, for example by an activation codeword expiring or through a further codeword providing capacity information expiring or otherwise. To overcome this, it is desirable that the validity of the licence is periodically rechecked. On receipt of an authorisation 41a, the client application 31 implements a timer which after a selected period will trigger the client application 31 to send a further request to check that the component is still licensed or to get the new available capacity of this feature. The step of checking the validity of the licence and returning a response is performed by the licence management module 30 as described above. in this way, the client application 31 is informed when a licence has expired, or when the licence capacity has been increased, for example.

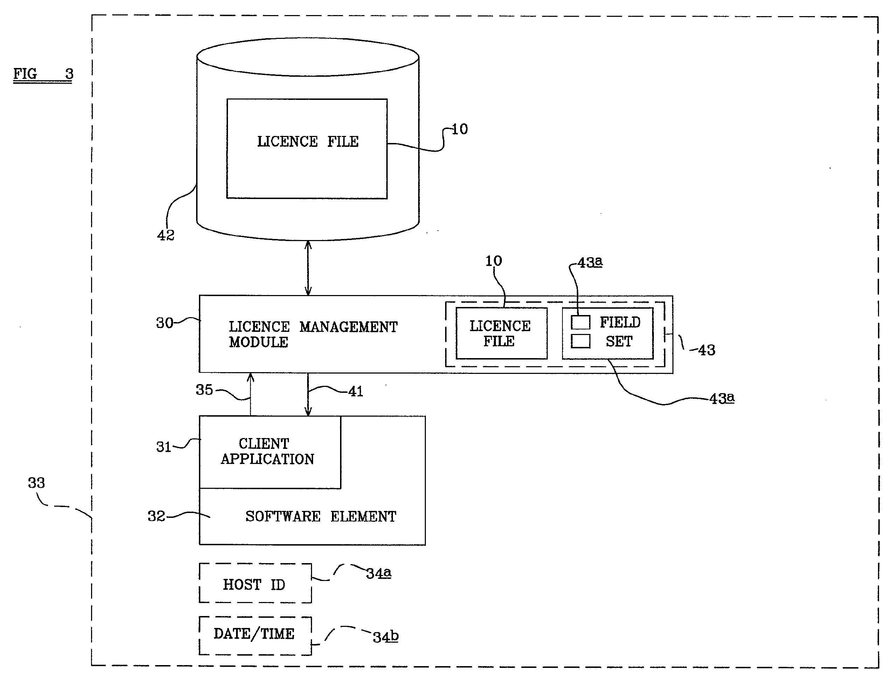

To speed up response times, a cache may be used as shown at 43 in Figure 3. When the software element 32 is installed or first run, the licence file 10 is read from the suitable data storage medium 42 and is saved in the cache 43. The licence file 10 stored in the cache 43 is then read by the licence manager module 30 during the checking process, and the licence file 10 on the data storage medium 42 is not read again unless it is updated. Thus, all the codewords of the licence file 10 are stored in the cache 43.

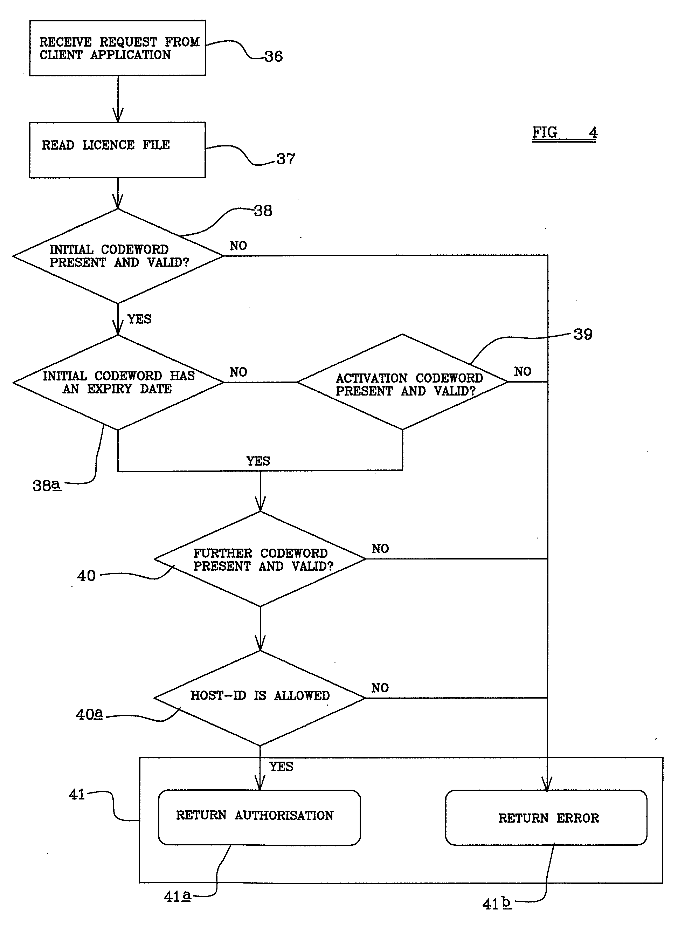

To further speed up the checking process, a field set 43a is defined and stored in the cache 43 comprising a subset of the information contained in the licence file 10. The field set 43a is built up in response to client requests from the client application 31. The fields comprise a set of field objects shown at 43b, each of which corresponds to a component ID value and can correspond to several further codewords, each of which have the same component ID value. The field set 43a is associated with a list of allowed host IDs which correspond to the host IDs identified in all valid activation codewords 13. The expiration date of the field set 43a corresponds to the smallest un-expired deadline of the codewords 12, 13, 14 which have been read when building the field set 43a. The existence of a field object 43b indicates the presence of a valid master codeword 12 and, where necessary, an activation codeword 13 and/or a component ID 14, and is thus equivalent to steps 38, 39 and 40 in Figure 4.

When the client application asks for a specific feature identified with a component ID, the licence manager module 30 first checks if a corresponding field object 43b exists in the field set 43a with the same component ID. If not, the licence file 10 whether on the data storage medium 42 or in the cache 43, is read and checked and the validation method as described hereinbefore performed to check that the requested feature is appropriately licenced. If the requested feature is licensed, a further field object 43b identified by the component ID of the requested component or feature is added to the field set 43a, and if appropriate the expiration date of the field set 43a is updated.

If a client request is received with a component ID which does match a field object 43b, the step of checking whether the requested component or feature is licensed, or whether capacity is available for the component or feature to be licensed is performed by checking if the corresponding field object exists, that the field set 43a has not expired, and if the host ID given in the client request is in the list of valid host ID's associated with the field set 43a. If the field set 43a has expired, the licence file 10 has not necessarily expired. The field set 43a is reinitialised, that is built up as described hereinbefore, the new field set's expiration date is computed from the codewords stored in the cache 43, and all the field objects 43b are deleted and will be rebuilt when the client application asks for the corresponding component IDs. If the licence file 10 has expired, the field set cannot be reinitialised and an appropriate error message is returned to the client application.

The step of checking the validity and consistency of the codewords 12, 13, 14 is therefore performed when reading the licence file 10 to assemble a field object 43b, while checking that a component or feature is licensed is performed by checking the relevant field object 43b in the field set 43a. Hence, in the foregoing description, the steps of reading the licence file 10 and checking the presence and validity of one or more codewords is intended to encompass building and reading a field set 43a and field objects 43b as described herein, and mutatis mutandis should be read as such.

By making only the immediately necessary information readily available to the licence manager module 30 in this manner, the process of generating a response in reply to a client request is made quicker and more efficient.

It will be apparent that the present invention may be used for stand-alone computer systems as shown above, for example, advantageously, telecommunications infrastructure hardware. Nevertheless, it will be apparent that the invention may be adapted to any appropriate situation where enforceable licensing of a software application is desired. For example, where the licence module manager is a server program, client requests may be received from client applications 31 on distant connected computers and a response returned accordingly.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A licence file for a software element readable by a licence management module to control use of the software element, the licence file having an associated licence identifier,
the licence file comprising at least one codeword
one codeword of the licence file comprising an master codeword, the master codeword encoding the licence identifier,
and at least one codeword of the licence file comprising a component identifying a component or feature of the software element.
wherein the licence file indicates to the licence management module that use of a component or feature of the software element is permitted when the licence file comprises a valid master codeword and a valid codeword comprising a component ID identifying the component or feature.

2. A licence file according to claim 1 comprising at least one activation codeword, the activation codeword encoding the licence identifier and further licence information, wherein the licence file indicates to the licence management module that use of the feature of the software element is permitted where the file comprises at least one valid activation codeword.

3. A licence file according to claim 2 wherein the further licence information comprises an identifier of a computer system on which use of the software element is permitted.

4. A licence file according to any one of claims 1 to 3 wherein the master codeword or the further licence information comprises expiry information.

5. A licence file according to any one of claims 1 to 4 wherein the master codeword comprises a component ID identifying a individually licensed feature or component of the software element.

6. A licence file according to any one of claims 1 to 5 further comprising a further codeword wherein the further codeword encodes the licence identifier and a component ID identifying a individually licensed feature or component of the software element.

7. A licence file according to claim 6 wherein the further codeword encodes capacity information and/or expiry information.

8. A licence file according to claim 6 or claim 7 wherein the further codeword comprises a serial number identifying that codeword.

9. A licence management module operable to control use of a software element wherein a licence file is associated with the software element, the licence file comprising a licence file according to any one of claims 1 to 9, the licence management module being operable to;
receive a client request indicating that use of a component of the software element is required,
read the master codeword and check its validity,
identify a codeword comprising a component ID identifying the component and check its validity, and
generate a response in accordance with the presence and validity of the master codeword and the codeword comprising a component ID.

10. A licence management module according to claim 9 wherein the step of checking the validity of the master codeword comprises one of the following steps;
where the master codeword encodes expiry information, comparing the expiry information with the current date or time and identifying the master codeword as invalid if the master codeword has expired;
where the master codeword does not comprise expiry information, identifying at least one valid activation codeword and identifying the master codeword as invalid if the licence identifier encoded in the or each activation codeword does not match the licence identifier encoded in the master codeword.

11. A licence management module according to claim 9 or claim 10 where dependent directly or indirectly on claim 2 wherein the licence file comprises an activation codeword and the licence manager module is operable to check the validity of the activation codeword by performing one or more of the following steps;
comparing the encoded licence identifier with the licence identifier encoded in the master codeword and identifying the activation codeword as invalid where the encoded licence identifier does not match the licence identifier encoded in the master codeword,
where the activation codeword comprises expiry information, comparing the expiry information with the current date or time and identifying the activation codeword as invalid if the activation codeword has expired,

12. A licence management module according to claim 11 wherein the activation codeword encodes at least one identifer of a computer system on which use of the software element is permitted and wherein the client request comprises an identifier of a computer system on which the software element is being run, wherein the licence management module is operable to compare the identifier encoded in the activation codeword with the identifier of a computer system included in the client request and generating a response comprising an error message if the identifier encoded in the activation codeword does not match the identifier included in the client request.

13. A licence management module according to claim 12 wherein the licence file comprises a plurality of activation codewords encoding a plurality of identifiers of a plurality of computer systems, wherein the response comprising an error message is generated if the identifier in the client request does not match at least one of the plurality of identifiers.

14. A licence management module according to any one of claims 9 to 13 where dependent directly or indirectly on claim 7 wherein the licence management module is operable to read the licence file to identify a further codeword encoding a component ID associated with the component of the software element and check the validity of the further codeword.

15. A licence management module according to claim 14 where dependent directly or indirectly on claim 7 or claim 8 wherein the licence management module is operable to check the validity of the further code word by performing one or more of the following steps;
comparing the encoded licence identifier with the licence identifier encoded in the master codeword the licence file and identifying the codeword as invalid where the coded licence identifier does not match the licence identifier encoded in the master codeword,
comparing the expiry information with the current date or time and identifying the codeword as invalid if the codword has expired.

16. A licence management module according to claim 14 or claim 16 wherein, the further codeword comprises capability information and the licence management module is operable to return the capacity information in the response.

17. A licence management module according to any one of claims 9 to 16 wherein the response comprises an authorisation message or an error message in accordance with the validity of one or more of said codewords.

18. A licence management module according to any one of claims 9 to 17 operable to store the or each codeword in a cache, wherein the step of reading the licence file comprises the step of reading the cache.

19. A licence management system comprising a software element, a licence file according to any one of claims 1 to 8 associated with the software element and a licence management module according to any one of claims 9 to 18.

20. A licence management system according to claim 19 wherein the software element comprises a client program operable to generate the client request, transmit the client request to the licence management module, receive the response and perform an enforcement step in accordance with the response.

21. A licence management system according to claim 20 wherein the enforcement step comprises one or more of the following operations;
permitting the software element to run, preventing the software element from running, displaying a warning message, logging the request.

22. A method of controlling use of a software element wherein a licence file is associated with the software component, the licence file having an associated licence identifier, the method comprising the steps of;
receiving a client request indicating that use of a component of the software element is required,
reading the master codeword and checking its validity,
identifying a codeword comprising a component ID identifying the component and checking its validity, and
returning a response in accordance with the presence and validity of the master codeword and the codeword comprising a component ID.

23. A method according to claim 22 wherein the client request comprises an identifier of a computer system on which the software element is to be run, comprising the step of identifying a valid activation codeword encoding at least one identifier of a computer system on which the software element is permitted to be run or a valid activation codeword which does not encode an identifier of a computer system and generating a response comprising an error message if the activation codeword does encode an identifier of a computer system and the identifier in the client request does not match an identifier encoded in the activation codeword.

24. A method of supplying a licence comprising the steps of supplying a licence file having an associated licence identifier and an master codeword encoding the licence identifier to a user, receiving the licence identifier and a computer system identifier from the user, generating an activation codeword encoding the licence identifier and computer system identifier and transmitting the activation codeword to the user.

25. A method according to claim 23 comprising the step of entering the activation codeword in the licence file.
